Europäisches Patentamt

European Patent Office

Office européen des brevets

(11) Publication number: **0 099 379**
**B1**

(12) **EUROPEAN PATENT SPECIFICATION**

(45) Date of publication of patent specification: **30.10.85**

(51) Int. Cl.⁴: **B 65 G 47/16, B 65 G 19/14**

(21) Application number: **83900415.7**

(22) Date of filing: **25.01.83**

(86) International application number:
**PCT/DK83/00008**

(87) International publication number:
**WO 83/02603 04.08.83 Gazette 83/18**

(54) **A MATERIAL INTAKE DEVICE FOR A SCRAPER CONVEYOR.**

(30) Priority: **26.01.82 DK 323/82**

(43) Date of publication of application:
**01.02.84 Bulletin 84/05**

(45) Publication of the grant of the patent:
**30.10.85 Bulletin 85/44**

(84) Designated Contracting States:
**DE FR GB NL SE**

(56) References cited:
**DE-A-2 606 076**
**GB-A-1 329 746**
**GB-A-1 375 798**
**US-A- 715 371**
**US-A-2 679 921**

(73) Proprietor: **DAHL, Christian Thomsen**
**Svanebjerggaard**
**DK-6040 Egtved (DK)**
(73) Proprietor: **DALL, Thöge Hellesöe**
**Aftensang 22**
**DK-6040 Egtved (DK)**

(72) Inventor: **DAHL, Christian Thomsen**
**Svanebjerggaard**
**DK-6040 Egtved (DK)**
Inventor: **DALL, Thöge Hellesöe**
**Aftensang 22**
**DK-6040 Egtved (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention relates to a material intake device of a scraper conveyor, comprising a through passage for the scraper conveyor and a wheel for engaging the scraper conveyor, said wheel being drivingly connected with a supply conveyor operable to convey material from an associated material collector into said through passage. Such intake devices are already known form US—A—2 679 921 and GB—A—1 329 746.

·The invention is related to our prior international patent application No WO—A—83/01245 which discloses a traction station for a scraper conveyor primarily for use in an automatic animal feeding system. Thus, the material referred to in the following typically consists of a granular, dry feedstuff of a similar material.

For supplying the relevant material to a scraper conveyor it is conventional to arrange for a lateral intake located at the lower end of a chute, to which the material is supplied at a rate sufficient to enable the material to slide into the spaces between the moving scraper members of the scraper conveyor. According to the condition of the material, however, this may result in the said spaces being filled in a non-uniform manner and even in the material clogging up in front of the intake. Normally the said supply conveyor is a complicated device comprising a reciprocating outlet gate system located adjacent the outlet end of the chute and driven by the said wheel, and the gate system does not deliver the material too constantly, whereby the non-uniform filling of the said spaces is further accentuated. Generally the spaces should not be entirely filled, which would amount to operational overfilling, and by partial filling it is of course desirable that the successive spaces are filled uniformly.

It is the purpose of the invention to provide an improved material intake device, in which the material in a simple manner is supplied to the scraper conveyor as uniformly as delivered from the supply conveyor.

According to the invention this is achieved by the features recited in the characterizing clause of claim 1. With the device according to the invention the material delivered by the supply conveyor will fall down direct into the spaces between the scraper members.

According to a preferred feature of the invention the supply conveyor operatively connected with the wheel is of a type effectively operating in synchronism with the wheel for a well controlled material supply, preferably a worm conveyor secured to the wheel adjacent said open hub portion thereof and extending axially into a material container, from which it supplies the material to the wheel at a rate determined by the rotational speed of the wheel. It is possible to hereby effect a substantially uniform filling of the said spaces.

In the following the invention is explained in more detail, by way of example, with reference to the drawing, in which:—

Fig. 1 is a sectional side view of a material intake device according to the invention, and

Fig. 2 is a perspective view of the device.

The device shown comprises a housing A, in which a wheel 2 is rotatably arranged, this wheel cooperating with a scraper conveyor 4, 6, which enters the housing through an upper pipe 3 and leaves it through a lower pipe 5, while being guided through 180° about the wheel 2. The scraper conveyor consists of a cable 4 provided with scraper discs 6, and it is in driving engagement with the periphery of the wheel 2 in accordance with the principles disclosed in said prior patent application.

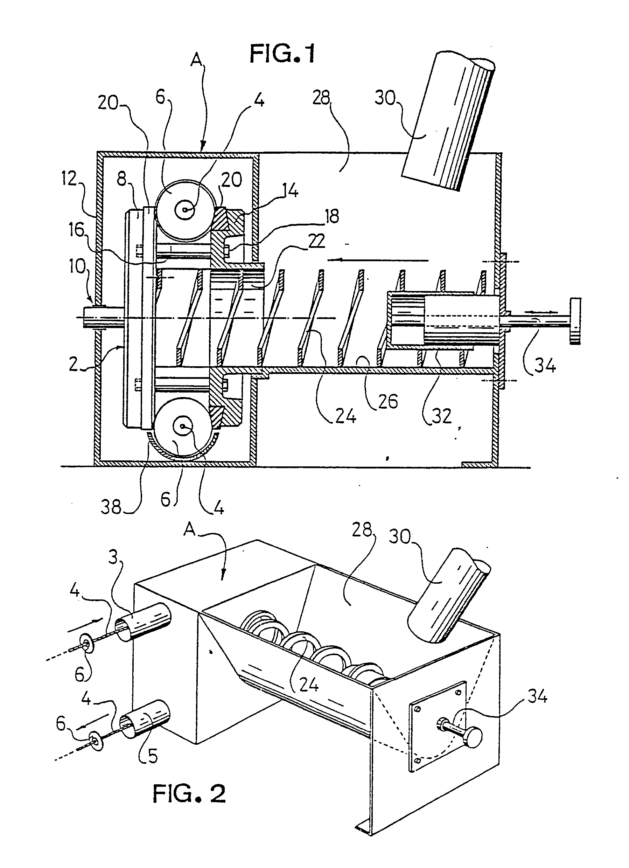

The driving wheel 2 consists of two parts of which a left part 8 (Fig. 1) is a disc rotatably mounted in a bearing 10 in a wall portion 12 of the housing A. The disc 8 is connected with an opposed wheel part 14 (Fig. 1) by means of distance members 16 and bolts 18. Both of the wheel parts 8 and 14 are provided with peripheral friction members 20 engaging with the scraper discs 6.

The wheel part 14 is provided with a central cylindrical hub opening 22 through which extends a worm member 24 which is secured to the wheel part 8 and which outside the wheel part 14 cooperates with the bottom portion 26 of a generally V-shaped receiver container 28, to which the material or feedstuff is led via a supply tube 30 from a bigger supply tank or silo.

Opposite the driving wheel 2 the worm member 24 is provided with a core piston 32, which is axially adjustable by means of a handle rod 34.

In operation, the worm member 24 will be rotated so as to convey the material from the container 28 into and through the hub opening 22, whereby the material will fall down in the open space between the wheel parts 8 and 14 and thus get deposited between the discs 6 of the scraper conveyor underneath the hub opening, the discs here being moved in a lower half cylindrical portion 38 continuing as the lower half of the conveyor pipe 5. Thus, all material as introduced by the worm member 24 will be safely transferred directly to the scraper conveyor.

If the speed of the scraper conveyor is changed, then the same change will apply to the operation of the worm member 24.

By adjusting the axial position of the core piston 32 a certain capacity adjustment will be possible, because in practice the worm will tend to convey material even from the free core space of the worm. Preferably the core piston 32 should be long enough to be adjustable to fill out the core space along the entire length of the worm in the container 28.

The device shown may constitute a traction station for the scraper conveyor 4, 6, if the wheel 2 is motor driven, but an attractive application of the device is as a passive material supply unit to be mounted at a desired location in a scraper conveyor system, the driving of the worm member 24 then being effected by the movement of the scraper conveyor 4, 6. The scraper conveyor 4, 6 should not necessarily be guided through 180° about the wheel 2.

## Claims

1. A material intake device of a scraper conveyor (4, 6), comprising a through passage for the scraper conveyor (4, 6) and a wheel (2) for engaging the scraper conveyor, said wheel (2) being drivingly connected with a supply conveyor (24) operable to convey material from an associated material collector (28) into said through passage, characterized in that the wheel (2) has an axially open hub portion (22) operable to receive the material from the supply conveyor (24) and is provided with internal radial channel means extending between said open hub portion and the scraper conveyor engaging a peripheral portion (20) of the wheel (2).

2. A device according to claim 1, in which the supply conveyor is a worm conveyor (24) in direct axial connection with the wheel (2) and secured to the wheel adjacent said open hub portion thereof.

3. A device according to claim 1 or 2, characterized in that the wheel is constituted by a pair of mutually spaced disc members (8, 14) interconnected by a circular array of transverse distance members (16) leaving the wheel generally radially open.

4. A device according to claim 1, in which the wheel (2) is a passive element adapted to be driven by the scraper conveyor (4, 6).

5. A device according to claim 2, in which the worm conveyor generally is of the coreless type, and that it is provided with an axially displaceable core member (32) operable to adjust the conveying capacity of the conveyor worm.

6. A device according to claim 3, in which the opposed disc members (8, 14) of the wheel (2) are provided with peripheral friction areas (20) for engaging with the scraper members (6) of the scraper conveyor (4, 6).

## Patentansprüche

1. Materialeingabevorrichtung eines Kratzerförderers (4, 6), versehen mit einem Durchgang für den Kratzerförderer (4, 6) und einem Rad (2) zum Eingreifen in den Kratzerförderer, wobei das genannte Rad (2) in Antriebsverbindung mit einem Zuführförderer (24) steht, der dazu dient, Material von einem zugeordneten Materialsammler (28) zum genannten Durchgang zu fördern, dadurch gekennzeichnet, dass das Rad (2) einen axial offenen Nabentiel (22) aufweist, der dazu dient, das Material vom Zuführförderer (24) zu übernehmen, und der mit internen radialen Kanälen versehen ist, die sich zwischen dem genannten offenen Nabenteil und dem Kratzerförderer, der in einem Umfangsteil (20) des Rades (2) eingreift, erstrecken.

2. Vorrichtung nach Anspruch 1, wobei der Zuführförderer ein Schneckenförderer (24) ist, der in unmittelbarer axialer Verbindung mit dem Rad (2) steht und an dem Rad, das dem genannten offenen Nabenteil benachbart ist, befestigt ist.

3. Vorrichtung nach Anspruch 1 oder 2, dadurch gekennzeichnet, dass das Rad aus einem Paar mit Abstand voneinander angeordneter Scheiben (8, 14) besteht, die durch eine kreisförmige Reihe querliegender Distanzhalter (16) miteinander verbunden sind, welche Distanzhalter das Rad im allgemeinen radial offen lassen.

4. Vorrichtung nach Anspruch 1, wobei das Rad (2) ein vom Kratzerförderer (4, 6) antreibbares passives Element ist.

5. Vorrichtung nach Anspruch 2, wobei der Schneckenförderer im allgemeinen vom kernlosen Typ ist und mit einem axial verschiebbaren Kern (32) versehen ist, der dazu dient, die Förderkapazität der Förderschnecke einzustellen.

6. Vorrichtung nach Anspruch 3, wobei die sich gegenüberliegenden Scheiben (8, 14) des Rades (2) mit Umfangsreibungsflächen (20) zum Eingreifen in die Kratzerelemente (6) des Kratzerförderers (4, 6) versehen sind.

## Revendications

1. Dispositif d'introduction de matériau pour transporteur à raclettes (4, 6), comprenant un passage débouchant pour le transporteur à raclettes (4, 6) et une roue (2) destinée à coopérer avec le transporteur, la roue (2) étant entraînée par raccordement à un transporteur d'alimentation (34) destiné à transporteur le matériau d'un collecteur associé (28) de matériau audit passage débouchant, caractérisé en ce que la roue (2) a une partie de moyeu (22) ouverte axialement et destinée à recevoir le matériau du transporteur d'alimentation (24) et comporte des canaux internes radiaux formés entre la partie ouverte de moyeu et le transporteur à raclettes qui est au contact d'une partie périphériquee (20) de la roue (2).

2. Dispositif selon la revendication 1, dans lequel le transporteur d'alimentation est un transporteur à vis (24) directement raccordé axialement à la roue (2) et fixée à celle-ci prés de sa partie ouverte de moyeu.

3. Dispositif selon l'une des revendications 1 et 2, caractérisé en ce que la roue est constitutée par une paire de disques (8, 14) distants l'un de l'autre et raccordés par un arrangement circulaire d'organes transversaux (16) d'entretoise laissant la roue ouverte en direction générale radiale.

4. Dispositif selon la revendication 1, dans lequel la roue (2) est un élément passif destiné à être entraîné par le transporteur à raclettes (4, 6).

5. Dispositif selon la revendication 2, dans lequel le transporteur à vis est de façon générale du type sans âme, et il comporte une âme (32) mobile axialement et destinée à régler la capacité de transport du transporteur à vis.

6. Dispositif selon la revendication 3, dans lequel les disques opposés (8, 14) de la roue (2) ont des zones périphériques de friction (20) destinées à coopérer avec les raclettes (6) du transporteur à raclettes (4, 6).

## FIG.1

## FIG. 2